# EUROPEAN PATENT APPLICATION

(11) **EP 3 037 587 A1**
(43) Date of publication of application: **29.06.2016**
(21) Application number: 14200052.0
(22) Date of filing: 23.12.2014
(51) Int. Cl.: E02D 27/52, F03B 13/26

(54) **A ballasted hydroelectric turbine system**

(71) Applicant: Openhydro IP Limited, Dublin 2 (IE)
(72) Inventor: Doyle, Tom, Drumcondra, Dublin 9 (IE); Cobbe, Mark, Portarlington, County Laois (IE)
(74) Representative: O'Neill, Brian

(57) **Abstract**

The present invention is concerned with a method of installing a hydroelectric turbine system including the steps of lowering a base (12) for a turbine (10) or related electrical component onto an underwater deployment substrate, in particular the seabed, and subsequently locating ballast (30) about the base (12) in order to provide improved stability to the turbine system (10).

## Description

### Field of the invention

The present invention is concerned with a system and method of installing a hydroelectric turbine or related electrical system, in particular a system comprising a gravity base on which is carried a hydroelectric turbine and/or other electrical processing/conditioning equipment arranged to generate electricity in response to the tidal flow of water through the turbine when the base and turbine are located on the seabed or some other suitable underwater deployment substrate. The system and method of the invention are intended to improve the stability of the turbine system during extreme weather events or the like, while avoiding the requirement of over engineering the turbine system for normal operating conditions.

### Background of the invention

The importance of renewable forms of energy is well established, and while a number of renewable energy sources are now being relatively well exploited, for example wind and solar power, the arguably greater potential and predictability of tidal power remains relatively underutilised.

One of the main reasons for the underutilisation of tidal power stems from the harsh conditions under which tidal harnessing devices are required to operate. This requires the devices to be extremely robust to withstand both the standard operating conditions and the extreme weather events which, while occurring less frequently, must be factored into the design of such devices. In addition the harsh conditions make deployment of such devices significantly more difficult and therefore costly than, for example, wind turbines, and for the same reasons the maintenance requirements and costs for tidal energy harnessing devices are significantly greater than other forms of renewable energy which are not required to be deployed in or underwater.

The harsh operating conditions prevalent at these difficult to reach sites, and the continuously reversing direction of tidal flow, results is a very limited time window within which a deployment may be performed. It is therefore beneficial to utilise a gravity type base which requires no preparation of the seabed prior to or following deployment, allowing the base, with or without a turbine or other component mounted thereon, to be deployed within the limited window available. However as a gravity base is generally not secured to the seabed through piling or the like, it is often necessary to significantly over engineer such a base in order to ensure stability during operation on the seabed. This gives rise to further problems however, for example the increased size and weight of such systems then require the marine equipment needed to install the hardware to be larger, and in general this result in such vessels having a deeper draught which then requires a correspondingly deeper draught at the quayside or other deployment location in order to enable mobilisation of the vessels. Larger lifting and transport equipment is needed to assemble the hardware and install the hardware, increasing the cost and complexity of each step in the manufacturing and deployment process

It is therefore an object of the present invention to overcome some of the above-mentioned problems of the prior art.

### Summary of the invention

According to a first aspect of the present invention there is provided a method of installing a hydroelectric turbine system comprising the steps of:
lowering a base for a turbine onto an underwater deployment substrate; and
locating ballast about the base subsequent to lowering onto the deployment substrate.

Preferably, the method comprises locating ballast about the base at discrete locations such as provide increased stability along one or more axes of the hydroelectric turbine system.

Preferably, the method comprises locating ballast about the base in continuous form such as provide increased stability along one or more axes of the hydroelectric turbine system.

Preferably, the method comprises securing the ballast to one or more couplings located about base.

Preferably, the method comprises the step of locating ballast in one or more receptacles provided about the base.

Preferably, the method comprises the step of utilising a three legged base.

Preferably, the method comprises the additional steps of:
removing the ballast from the base; and
recovering the base from the deployment substrate.

Preferably, the method comprises the step of depositing the ballast on the deployment substrate following removal from the base.

Preferably, the method comprises, in the step of depositing the ballast, locating the ballast on the deployment substrate in close proximity to the base.

Preferably, the method comprises the further steps of:
returning the or another base onto the deployment substrate at the same location;
retrieving the ballast from the deployment substrate; and
adding the ballast to the base.

Preferably, the method comprises the additional step of securing a hydroelectric turbine to the base before or after the ballast is located about the base.

Preferably, the method comprises the step of adding ballast to the turbine before or after the turbine is secured to the base.

Preferably, the method comprises the step of retrieving the turbine from the base prior to recovering the base from the deployment substrate.

Preferably, the method comprises deploying the ballast for a finite period in which the hydroelectric turbine system is subjected to increased external forces giving rise to instability.

Preferably, the method comprises deploying the ballast from a vessel used to lower the base onto the deployment substrate.

Preferably, the method comprises using an underwater vehicle to deploy the ballast about the base.

Preferably, the method comprises the step of utilising the vehicle as a template for correctly aligning the ballast with the base prior to deploying the ballast about the base.

Preferably, the method comprises utilising the vehicle to deploy the base onto the underwater substrate.

Preferably, the method comprises retrieving the base from the underwater substrate by means of the vehicle.

According to a second aspect of the present invention there is provided a hydroelectric turbine ballasting system comprising a base for a hydroelectric turbine; and ballast locatable about the base to provide increased stability to the base when located on an underwater deployment substrate.

Preferably, the ballasting system comprises a coupling for securing the ballast to the base.

Preferably, the ballast is configurable.

Preferably, the ballasting system comprises one or more receptacles provided about the base for receiving and retaining the ballast.

Preferably, the ballasting system comprises an underwater vehicle for deploying the ballast and/or deploying the base onto the underwater substrate and/or retrieving the base from the underwater substrate.

Preferably, the ballasting system comprises a three legged base.

As used herein, the term "deployment substrate" is intended to mean any underwater surface, such as the seabed, whether pre-prepared or untouched, which is capable of receiving and supporting a hydroelectric turbine system thereon.

As used herein, the term "continuous" is intended to mean ballast that is provided in a physical form that has two dimensions significantly greater than the other dimension, for example a plate form.

As used herein, the term "coupling" is intended to mean any means or mechanism which permits another object, for example ballast, to be retained, and may be a passive coupling such as an upright or the like onto which an item may be deposited, a receptacle into which an item may be deposited, or may be an active coupling adapted to actively engage the one or more items to be retained.

As used herein, the term "stability" is intended to mean the ability of a structure to resist overturning and/or sliding or other undesirable displacement relative to a substrate on which the structure is located.

As used herein, the term "vehicle" is intended to mean an object capable of transporting items, for example ballast, which vehicle may have an on-board means of propulsion or may be displaced by other means, for example being suspending beneath and displaceable by a vessel such as a barge or ship.

As used herein, the term "gravity base" is intended to mean a structure which is adapted to be located and retained in position on a substrate primarily by means of gravity acting on the base.

### Brief description of the drawings

The present invention will now be described with reference to the accompanying drawings, in which:
Figure 1 illustrates a schematic representation of a hydroelectric turbine system according to an embodiment of the present invention, having ballast located about a base of the system;
Figure 2 illustrates a perspective view of a discrete piece of ballast being lowered onto a coupling provided on the base of the system shown in Figure 1;
Figure 3 illustrates a perspective view of the hydroelectric turbine system illustrated in Figure 1, incorporating a number of the couplings as an alternative or additional means of receiving ballast;
Figure 4 illustrates an alternative continuous form of ballast which may be secured to the base of the system by means of the plurality of couplings as shown in Figure 3; and
Figure 5 illustrates an underwater vehicle, which may form part of the system of the invention, lowering ballast towards the base, the vehicle being adapted to deploy and/or retrieve the base and preferably the ballast.

### Detailed description of the drawings

Referring now to the accompanying drawings there is illustrated a hydroelectric turbine system, generally indicated as 10, and a method of installing and subsequently recovering the turbine system 10, according to an embodiment of the present invention. The hydroelectric turbine system 10 comprises, in the preferred embodiment illustrated, a gravity base 12 and a hydroelectric turbine 14 reversibly mountable to the gravity base 12, thereby allowing numerous options for deploying and retrieving the system 10. For example the combined base 12 and turbine 14 may be deployed as a single unit onto an underwater substrate such as the seabed or the like, but equally the base 12 may be deployed in the absence of the turbine 14, which turbine 14 may then be deployed onto the previously deployed base 12. Similarly the turbine 14 may be retrieved from the seabed or other underwater deployment substrate, while leaving the base 12 in position, or the combined base 12 and turbine 14 may be retrieved as a single unit, and by any suitable means including one or more ships, barges or other vessels. The invention is not however intended to be limited to use with a gravity base, although this is the preferred embodiment. The turbine 14 could also be omitted in place of one or more electrical components (not shown) for processing and/or conditioning electricity generated by one or more of the turbines 14, for example when provided in an array, and for the purposes of the following description the term "turbine" should be construed as covering such components.

In the embodiment illustrated the base 12 is in the form of a gravity base 12 having three legs 16 in a triangular configuration, connected together by means of a number of cross members 18. It will be appreciated that the number and configuration of the legs 16 may be varied, as may the particular arrangement of components, including the cross members 18, making up the base 12. One or more of the legs16 may be provided with a downwardly extending foot (not shown) in order to improve contact with, and optionally resist movement relative to, the underwater deployment substrate on which the hydroelectric turbine system 10 is located. Similarly it will be understood that while preferred deployment and retrieval methodologies are hereinafter described for positioning the system 10 onto the seabed, and for retrieving part or all of the system 10 for maintenance or replacement, any other suitable methodologies may be employed for these purposes and the invention is not intended to be limited to use with the preferred methodologies hereinafter described and shown.

Furthermore the system and method of the present invention are not intended to be limited to use with the preferred form of hydroelectric turbine 14 hereinafter described and shown. The preferred form of the turbine 14 includes an outer annular housing 20 which may form a stator of an electrical generator (not shown) integrated into the turbine 14, and which housing 20 defines an axially extending venturi flow path. The housing 20 further serves to retain a rotor 22 therein which is free to rotate in response to the tidal flow of water through the flow path defined by the housing 20. The rotor 22 defines the rotating component of the above-mentioned electrical generator (not shown) so that relative movement between the rotor 22 and the housing 20 effects the generation of electricity in known fashion. Any other suitable form of hydroelectric turbine may however be employed, whether a similar rim mounted turbine or a shaft mounted turbine, or indeed any other form of device capable of extracting power from the tidal flow of water.

In the preferred embodiment illustrated the base 12 comprises a pair of uprights 24 onto which the turbine 14 may be secured, preferably by means of a pair of cooperating collars 26 provided externally and on opposed sides of the housing 20. In this way the turbine 14 can be lowered into position onto the uprights 24, which operation may occur prior to deploying the base 12 onto an underwater substrate, or subsequent to such deployment. Thus for example the base 12 may be secured to or beneath a deployment vehicle 28 which may itself be suspended beneath a barge (not shown) by means of a number of lowering lines in known fashion, and the barge then transported to the intended deployment site. The base 12 may then be lowered on to an underwater deployment substrate located beneath the vehicle 28, in this case the unprepared seabed, and the base 12 released from the vehicle 28. Once the base 12 has been correctly deployed the turbine 14 may then be lowered into position onto the base 12, and preferably by means of the same deployment vessel 28, thereby reducing the marine equipment requirements for the deployment and/or retrieval processes. The base 12 could however be directly lowered onto the seabed by means of the lowering lines fed from the above mentioned barge, in the absence of the intermediate vehicle 28.

Once the base 12, whether with or without the turbine 14 mounted thereon, is securely positioned on the underwater deployment substrate, ballast 30 may then be located about the base 12, and optionally about the turbine 14, in order to increase the effective weight of the system 10 to provide increased resistance to forces which act to displace the system 10 from its intended deployment location and attitude, for example an extreme weather event such as a storm surge, turbulence, and/or waves or the like. In addition to these issues of unwanted lateral displacement and/or overturning, some tidal sites will have what are known as "off axis" effects which can give rise to issues with triangular or three legged base, which can be inherently unstable along certain axes. The ballast 30 may also be employed and/or configured to allow the turbine system 10 to be used at an underwater site whose tidal velocities would be too great to permit operation of the turbine system 10 without the ballast 30 located thereon. This thus allows for a certain level of standardisation for the size and/or weight of the system 10, in particular the gravity base 12. At the above-mentioned sites of higher tidal flow velocities, the ballast 30 would need to be effectively permanently deployed on the system 10 in order to resist the forces generated by the increased tidal velocities. At lower flow velocity sites the ballast 30 could be deployed temporarily, for example during periods at which an extreme event is predicted or likely. For example the ballast 30 could be omitted during the summer period when historical evidence has shown a low probability of an extreme weather event.

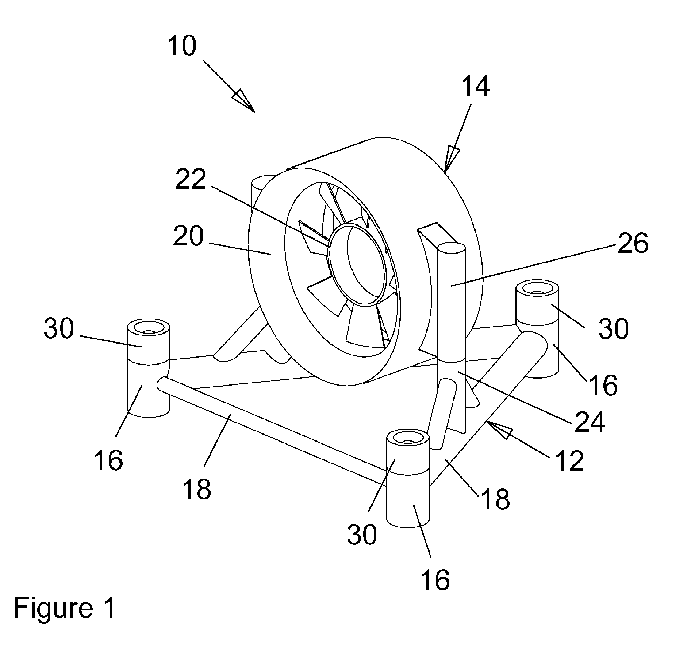

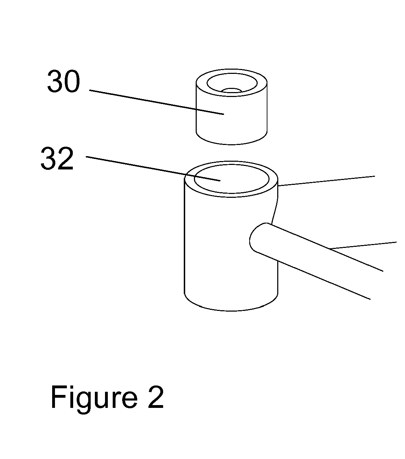

The ballast 30 may be provided in one or more forms, for example discrete units as illustrated in Figure 1, in which three discrete ballast units 30 are mounted to the base 12, one on each of the three legs 16, which therefore act in the capacity of a coupling for retaining the ballast 30. This is more clearly illustrated in Figure 2 in which it can be seen that an upper end of the leg 16 forms a sleeve or cradle for receiving at least a portion of the ballast 30.

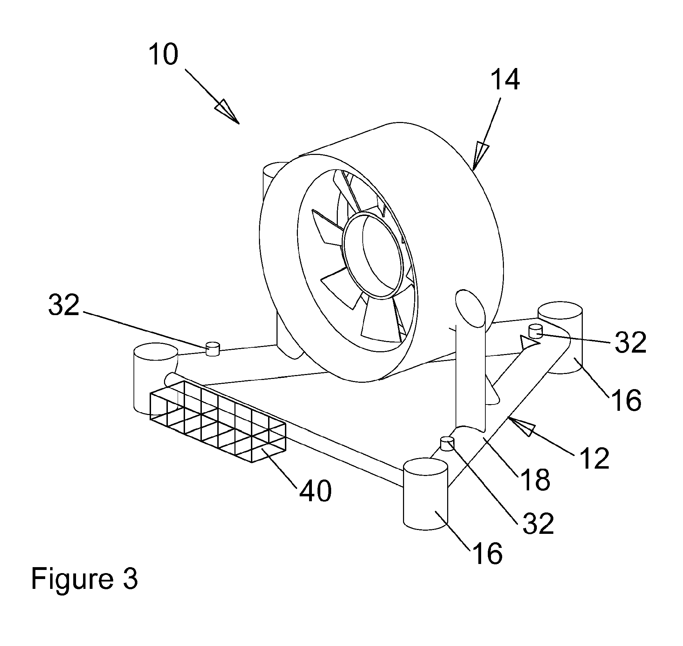

However any other suitable means may be provided for receiving and retaining the discrete units of ballast 30, and for example referring to Figures 3 a plurality of couplings 32 may be provided about the base 12 in the form of short upstanding pillars onto each of which one or more of the discrete ballast units 30 may be reversibly secured. It will be understood that any means of actively retaining the ballast unit 30 on the respective coupling 32 may be employed, although gravity retention is preferred in order to reduce the complexity of the system 10. It is also envisaged that the discrete ballast units 30 may be configured to be stackable, or otherwise arranged, to allow a multiple of the discrete ballast units 30 to be secured at any one location about the base 12, for example about one of the couplings 32. This then allows the ballast 30 be configured for a particular tidal site or predicted extreme weather event or the like. In addition this allows different turbine systems 10 within an array of the systems 10 to have different levels of ballasting, in order to suit, for example, variations in the loading experienced by different systems 10 within the array due to any number of reasons. Often these differences in loading will only be fully understood once the systems 10 have been deployed in the array, the retrofitting of ballast 30 again allowing the manufacture and deployment of a standard turbine system 10, whose weight, and the distribution of that weight, can then be varied on site by means of the ballast 30 in order to suit the conditions experienced.

As an alternative to the upright form of coupling 32, the system 10 may comprise a coupling in the form of a receptacle such as a basket 40 or the like as illustrated in Figure 3, into which may be deposited any suitable form of ballast, including one or more of the discrete ballast units 30. Such baskets 40 may be located at one or more locations about the base 12 and/or turbine 14.

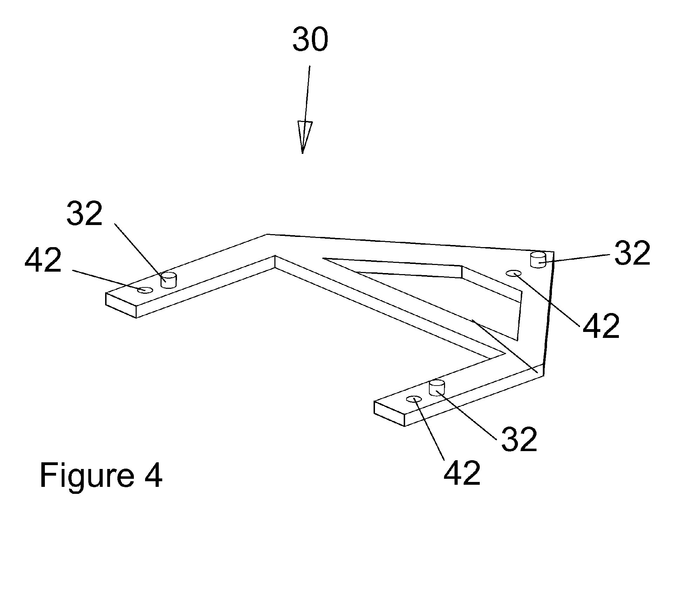

As a further alternative form of ballast 30, and referring in particular to Figure 4, the ballast 30 may be provided in plate or similar continuous form such that, once applied to the base 12, the loading of the ballast 30 is distributed over a relatively large area when compared to the effective point loading that is applied by the discrete ballast units 30 described above. The plate or continuous form of ballast 30 illustrated in Figure 4 is adapted to be mounted to the array of couplings 32 hereinbefore described and as shown in Figure 3. The ballast 30 is therefore provided with three openings 42 which are positioned to correspond to the three couplings 32 as illustrated in Figure 3. The ballast 30 is provided in a substantially A-shaped plate which essentially mirrors the shape and dimensions of the base 12, with a suitable opening to allow the ballast 30 to be lowered about the turbine 14, should it be installed on the base 12 prior to deployment of the ballast 30. The ballast 30 may also be provided, as illustrated, with one or more couplings 32, preferably the same upstanding couplings 32 as are provided directly on the base 12, thereby allowing multiples of the plate type ballast 30 to be stacked on top of one another. This again allows multiple configurations of ballast 30 to be employed. It will of course be understood that the continuous type of ballast 30 need not be in the shape and configuration illustrated in Figure 4, and may take any other suitable form. For example referring back to Figure 1, a continuous sheet of ballast 30 is secured to the base 12 directly beneath the turbine 14. It is also envisaged that ballast could be provided about the housing 20.

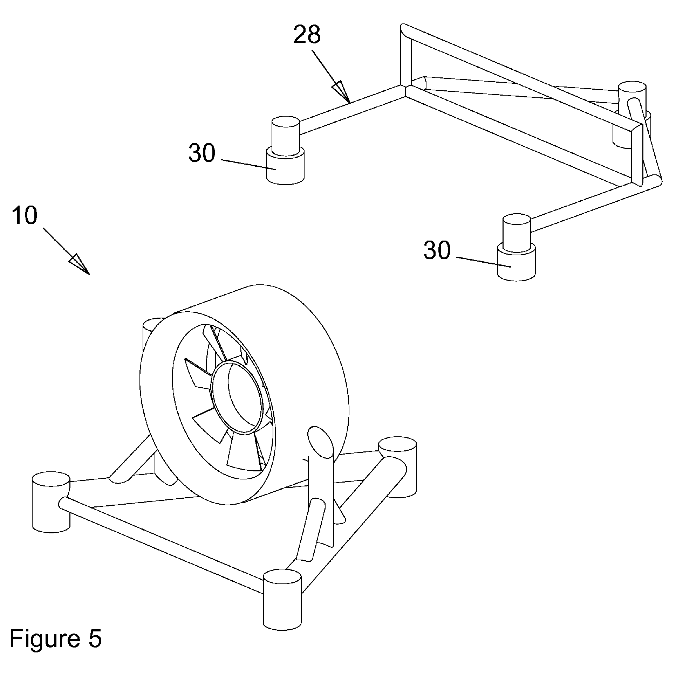

The system and method of the present invention may employ, as briefly mentioned above, the underwater vehicle 28 to effect deployment and/or retrieval of the base 12 onto the underwater substrate, and which may additionally be utilised to deploy and/or retrieve the ballast 30, whether in discrete or continuous form. The use of the single vehicle 28 and thus a single deployment vessel (not shown) beneath which the vehicle 28 is suspended, greatly reduces the cost and complexity of the various procedures involved in the deployment and retrieval of the system 10, including the ballast 30. The vehicle 28, which in the embodiment illustrated comprises a frame adapted to carry the ballast 30, may also be used as a template for correctly positioning the ballast 30 relative to the one or more locations about the base 12 onto which the ballast 30 must be located. For example the vehicle 28 may be configured to utilise some portion of the base 12 and/or the turbine 14, as the vehicle 28 is advanced either vertically and or laterally into position about the system 10, to immobilise the vehicle 28 at a relative position in which ballast 30 being carried by the vehicle 28 is correctly aligned with one or more of the couplings 32 and/or one or more of the baskets 40. By completing a final displacement of the vehicle 28, most likely a vertical drop, the one or more items of ballast 30 will be engaged by the respective coupling 32 and/or basket 40 or inserted into the legs 16. At this point, depending on the operation of the vehicle 28, any retaining means (not shown), for example one or more ball grabs (not shown) may be actuated in order to release the ballast 30 from the vehicle 28, which allows the ballast 30 to be fully transferred onto the system 10. Figure 5 illustrates an installation in which the system 10 has been deployed onto the seabed, the vehicle 28 then being used to transport and deploy ballast 30 to the system 10

The above procedure may be operated in reverse in order to retrieve ballast 30 from the system 10. The retrieved ballast 30 may be transferred ashore, deposited at a remote location assigned for such a purpose, or deposited in close proximity to the deployment site of the hydroelectric turbine system 10. The turbine 14 and/or base 12 could then be retrieved from the seabed, again preferably using the vehicle 28, for maintenance or replacement. Once the turbine 14 and/or base 12 are relocated at this deployment site it is then a more straightforward task, particularly if the ballast 30 has been left on the seabed or other substrate directly adjacent the deployment site, and again preferably using the vehicle 28, to retrieve the ballast 30 to be relocated onto the system 10. While it is preferred to use the vehicle 28 and the same vessel (not shown) for all of the above-mentioned procedures, it will of course be understood that different vessels could be used without departing from the scope of the present invention.

It will therefore be understood that the system and method of the present invention as hereinbefore described provide a relatively simple yet versatile means of modifying a hydroelectric turbine system 10 in order to be capable of surviving and operating in conditions that would otherwise have an adverse effect on such a turbine system 10. In addition the system and method of the present invention can allow a significant level of standardisation in the manufacture and deployment of large numbers of the hydroelectric turbine system 10, which can then be adapted on site for the particular conditions present.

## Claims

1. A method of installing a hydroelectric turbine system comprising the steps of:
lowering a base for a turbine onto an underwater deployment substrate; and
locating ballast about the base subsequent to lowering onto the deployment substrate.

2. A method according to claim 1 comprising locating ballast about the base at discrete locations such as provide increased stability along one or more axes of the hydroelectric turbine system.

3. A method according to any preceding claim comprising locating ballast about the base in continuous form such as provide increased stability along one or more axes of the hydroelectric turbine system.

4. A method according to any preceding claim comprising securing the ballast to one or more couplings located about base.

5. A method according to any preceding claim comprising the step of locating ballast in one or more receptacles provided about the base.

6. A method according to any preceding claim comprising the step of utilising a three legged base.

7. A method according to any preceding claim comprising the additional steps of:
removing the ballast from the base; and
recovering the base from the deployment substrate.

8. A method according to claim 7 comprising the step of depositing the ballast on the deployment substrate following removal from the base.

9. A method according to claim 8 comprising, in the step of depositing the ballast, locating the ballast on the deployment substrate in close proximity to the base.

10. A method according to any of claims 7 to 9 comprising the further steps of:
returning the or another base onto the deployment substrate at the same location;
retrieving the ballast from the deployment substrate; and
adding the ballast to the base.

11. A method according to any preceding claim comprising the additional step of securing a hydroelectric turbine to the base before or after the ballast is located about the base.

12. A method according to claim 11 comprising the step of adding ballast to the turbine before or after the turbine is secured to the base.

13. A method according to any of claim 11 or 12 comprising the step of retrieving the turbine from the base prior to recovering the base from the deployment substrate.

14. A method according to any preceding claim comprising deploying the ballast for a finite period in which the hydroelectric turbine system is subjected to increased external forces giving rise to instability.

15. A method according to any preceding claim comprising deploying the ballast from a vessel used to lower the base onto the deployment substrate.

16. A method according to any preceding claim comprising using an underwater vehicle to deploy the ballast about the base.

17. A method according to claim 16 comprising the step of utilising the vehicle as a template for correctly aligning the ballast with the base prior to deploying the ballast about the base.

18. A method according to claim 16 or 17 comprising utilising the vehicle to deploy the base onto the underwater substrate.

19. A method according to any of claims 16 to 18 comprising retrieving the base from the underwater substrate by means of the vehicle.

20. A hydroelectric turbine ballasting system comprising a base for a hydroelectric turbine; and ballast locatable about the base to provide increased stability to the base when located on an underwater deployment substrate.

21. A hydroelectric turbine ballasting system according to claim 20 comprising a coupling for securing the ballast to the base.

22. A hydroelectric turbine ballasting system according to claim 20 or 21 in which the ballast is configurable.

23. A hydroelectric turbine ballasting system according to any of claims 20 to 22 in which the coupling comprises one or more receptacles provided about the base for receiving and retaining the ballast.

24. A hydroelectric turbine ballasting system according to any of claims 20 to 23 comprising an underwater vehicle for deploying the ballast and/or deploying the base onto the underwater substrate and/or retrieving the base from the underwater substrate.

25. A hydroelectric turbine ballasting system according to any of claims 20 to 24 comprising a three legged base.
